# EUROPEAN PATENT APPLICATION

(11) **EP 4 588 553 A1**
(43) Date of publication of application: **23.07.2025**
(21) Application number: 23865435.4
(22) Date of filing: 08.09.2023
(51) Int. Cl.: B01D 61/36

(54) **MEMBRANE SEPARATION SYSTEM AND METHOD FOR OPERATING MEMBRANE SEPARATION SYSTEM**

(30) Priority: 14.09.2022 JP 2022146503
(71) Applicant: NITTO DENKO CORPORATION, Ibaraki-shi Osaka 567-8680 (JP)
(72) Inventor: KIMURA, Naomichi, Ibaraki-shi, Osaka 567-8680 (JP); HIRAI, Tomoya, Ibaraki-shi, Osaka 567-8680 (JP); NAKANO, Takeshi, Ibaraki-shi, Osaka 567-8680 (JP)
(74) Representative: Hoffmann Eitle
(86) International application number: PCT/JP2023/032933
(87) International publication number: WO 2024/058081

(57) **Abstract**

The present invention provides a membrane separation system suitable for recovering an organic compound efficiently. A membrane separation system 100 includes a membrane separation unit 10, a condensation unit 20, and a decompression unit 30. The condensation unit 20 is disposed between the membrane separation unit 10 and the decompression unit 30. The membrane separation unit 10 has a pervaporation membrane, and a feed space and a permeation space separated from each other by the pervaporation membrane. The pervaporation membrane separates a feed liquid S containing a volatile organic compound C and a gas G into a permeated fluid S₁ and a non-permeated fluid S₂. The condensation unit 20 condenses the organic compound C contained in the permeated fluid S₁. The decompression unit 30 decompresses an inside of the permeation space of the membrane separation unit 10. An operating condition of the decompression unit 30 is controlled in such a manner that a pressure P₁₀ in the permeation space of the membrane separation unit 10 has, during operation, a value larger than a minimum value of a pressure that the inside of the permeation space of the membrane separation unit 10 can reach during rated operation of the decompression unit 30.

## Description

### TECHNICAL FIELD

The present invention relates to a membrane separation system and a method for operating a membrane separation system.

### BACKGROUND ART

As an example of the method for separating a volatile organic compound from an aqueous solution containing the organic compound, a pervaporation method using a pervaporation membrane is known. The pervaporation method is suitable for separating a volatile organic compound from an aqueous solution containing various substances. The pervaporation method also tends to be able to better suppress the amount of energy consumption and the amount of emission of a gas, such as carbon dioxide, than a distillation method. There has been proposed a technique to produce a volatile organic compound continuously by combining a membrane separation device that performs the pervaporation method with a reaction vessel that produces the volatile organic compound. For example, Patent Literature 1 discloses a membrane separation system obtained by combining a membrane separation device with a reaction vessel.

### CITATION LIST

### Patent Literature

Patent Literature 1: JP 4048279 B

### SUMMARY OF INVENTION

### Technical Problem

The pervaporation method can be performed using a membrane separation unit that has a pervaporation membrane, and a feed space and a permeation space separated from each other by the pervaporation membrane. An inside of the permeation space is decompressed in a state in which a feed liquid is in contact with the pervaporation membrane, so that the feed liquid permeating through the pervaporation membrane evaporates. Thereby, a permeation fluid that is a gaseous matter is obtained. Conventionally, in a membrane separation system using the pervaporation method, the inside of the permeation space is decompressed by a decompression unit provided at a position subsequent to the membrane separation unit. The obtained permeated fluid that is a gaseous matter is liquefied in a condensation unit provided at a position subsequent to the decompression unit, so that the permeated fluid that is a liquid is obtained.

Given the fact that the pervaporation membrane even allows a gas contained in the feed liquid to permeate therethrough, the present inventors found that a gas, such as carbon dioxide, remains in the permeated fluid that is a gaseous matter and that has been separated by the pervaporation membrane. In a conventional membrane separation system using the pervaporation method, the permeated fluid that is a gaseous matter is supplied to the condensation unit as a gaseous emission from the decompression unit while still containing the gas. The gas, such as carbon dioxide, contained in the permeated fluid that is a gaseous matter decreases condensation efficiency of the condensation unit, and as a result, efficiency in recovering the organic compound is decreased.

Therefore, the present invention is intended to provide a membrane separation system suitable for recovering an organic compound efficiently.

### Solution to Problem

The present invention provides a membrane separation system including a membrane separation unit, a condensation unit, and a decompression unit, wherein
the condensation unit is disposed between the membrane separation unit and the decompression unit,
the membrane separation unit has a pervaporation membrane that separates a feed liquid containing a volatile organic compound and a gas into a permeated fluid and a non-permeated fluid, and a feed space and a permeation space separated from each other by the pervaporation membrane,
the condensation unit condenses the organic compound contained in the permeated fluid,
the decompression unit decompresses an inside of the permeation space of the membrane separation unit, and
an operating condition of the decompression unit is controlled in such a manner that a pressure in the permeation space of the membrane separation unit has, during operation, a value larger than a minimum value of a pressure that the inside of the permeation space of the membrane separation unit can reach during rated operation of the decompression unit.

In another aspect, the present invention provides a method for operating a membrane separation system including a membrane separation unit, a condensation unit, and a decompression unit, the condensation unit being disposed between the membrane separation unit and the decompression unit,
the membrane separation unit having a pervaporation membrane, and a feed space and a permeation space separated from each other by the pervaporation membrane,
the method including:
   separating a feed liquid containing a volatile organic compound and a gas into a permeated fluid and a non-permeated fluid with the pervaporation membrane of the membrane separation unit; and
   condensing, with the condensation unit, the organic compound contained in the permeated fluid, wherein
   the separating includes controlling an operating condition of the decompression unit in such a manner that a pressure in the permeation space of the membrane separation unit has a value larger than a minimum value of a pressure that an inside of the permeation space of the membrane separation unit can reach during rated operation of the decompression unit.

### Advantageous Effects of Invention

The present invention can provide a membrane separation system suitable for recovering an organic compound efficiently.

### BRIEF DESCRIPTION OF DRAWINGS

FIG. 1 is a schematic configuration diagram showing an example of a membrane separation system of the present embodiment.
FIG. 2 is a schematic cross-sectional view showing an example of a membrane separation unit included in the membrane separation system.
FIG. 3 is a schematic cross-sectional view of a pervaporation membrane included in the membrane separation unit.
FIG. 4 is a flow chart showing control of intermittent operation of a decompression unit included in the membrane separation system.
FIG. 5 is a timing chart showing an example of the intermittent operation.
FIG. 6 a flow chart showing control of low speed operation of the decompression unit included in the membrane separation system.
FIG. 7 is a developed perspective view schematically showing another example of the membrane separation unit.
FIG. 8 is a schematic configuration diagram showing a conventional membrane separation system.
FIG. 9 is a graph showing a relationship between a level of a recovery unit and time and a relationship between a pressure in a permeation space of the membrane separation unit and time in operation of Reference Example 1.
FIG. 10 is a graph showing a relationship between the level of the recovery unit and time and a relationship between the pressure in the permeation space of the membrane separation unit and time in operation of Example 1.
FIG. 11 is a graph showing a relationship between the level of the recovery unit and time and a relationship between the pressure in the permeation space of the membrane separation unit and time in operation of Example 3.
FIG. 12 is a graph showing a relationship between the pressure in the permeation space of the membrane separation unit and time and a relationship between power consumption of the decompression unit (a vacuum pump) and time in operation of Example 2.
FIG. 13 is a graph showing a relationship between the pressure in the permeation space of the membrane separation unit and time and a relationship between a total amount of power consumption of the decompression unit (the vacuum pump) and time in operation of Example 2.

### DESCRIPTION OF EMBODIMENTS

A membrane separation system according to a first aspect of the present invention includes a membrane separation unit, a condensation unit, and a decompression unit, wherein
the condensation unit is disposed between the membrane separation unit and the decompression unit,
the membrane separation unit has a pervaporation membrane that separates a feed liquid containing a volatile organic compound and a gas into a permeated fluid and a non-permeated fluid, and a feed space and a permeation space separated from each other by the pervaporation membrane,
the condensation unit condenses the organic compound contained in the permeated fluid,
the decompression unit decompresses an inside of the permeation space of the membrane separation unit, and
an operating condition of the decompression unit is controlled in such a manner that a pressure in the permeation space of the membrane separation unit has, during operation, a value larger than a minimum value of a pressure that the inside of the permeation space of the membrane separation unit can reach during rated operation of the decompression unit.

According to a second aspect of the present invention, for example, in the membrane separation system according to the first aspect, the operating condition of the decompression unit is controlled in such a manner that the pressure in the permeation space of the membrane separation unit is in a range from 0.2 to 20.0 kPa during operation.

According to a third aspect of the present invention, for example, in the membrane separation system according to the first or second aspect, the organic compound is condensed in the condensation unit and thereby a partial pressure of the organic compound in the permeated fluid is reduced.

According to a fourth aspect of the present invention, for example, in the membrane separation system according to any one of the first to third aspects, the decompression unit performs intermittent operation in which a stop of operation and a start of operation of the decompression unit are repeated alternately, or low speed operation in which the decompression unit is operated at an output power less than a maximum output power.

According to a fifth aspect of the present invention, for example, in the membrane separation system according to the fourth aspect, the decompression unit performs the intermittent operation or the low speed operation, and thereby the pressure in the permeation space of the membrane separation unit is adjusted to be in a range from 0.2 to 20.0 kPa.

According to a sixth aspect of the present invention, for example, in the membrane separation system according to the fourth aspect, the intermittent operation includes stopping the rated operation of the decompression unit when the pressure in the permeation space of the membrane separation unit falls below 0.2 kPa, and starting the rated operation of the decompression unit when the pressure in the permeation space of the membrane separation unit exceeds 20.0 kPa, and
the low speed operation includes operating the decompression unit at the output power less than the maximum output power when the pressure in the permeation space of the membrane separation unit falls below 0.2 kPa, and operating the decompression unit at the maximum output power when the pressure in the permeation space of the membrane separation unit exceeds 20.0 kPa.

According to a seventh aspect of the present invention, for example, the membrane separation system according to any one of the first to sixth aspects further includes, between the condensation unit and the decompression unit, a pressure regulating valve that adjusts the pressure in the permeation space.

A method for operating a membrane separation system according to an eighth aspect of the present invention is a method for operating a membrane separation system including a membrane separation unit, a condensation unit, and a decompression unit, the condensation unit being disposed between the membrane separation unit and the decompression unit,
the membrane separation unit having a pervaporation membrane, and a feed space and a permeation space separated from each other by the pervaporation membrane,
the method including:
   separating a feed liquid containing a volatile organic compound and a gas into a permeated fluid and a non-permeated fluid with the pervaporation membrane of the membrane separation unit; and
   condensing, with the condensation unit, the organic compound contained in the permeated fluid, wherein
   the separating includes controlling an operating condition of the decompression unit in such a manner that a pressure in the permeation space of the membrane separation unit has a value larger than a minimum value of a pressure that an inside of the permeation space of the membrane separation unit can reach during rated operation of the decompression unit.

The present invention will be described in detail below. The following description is not intended to limit the present invention to a specific embodiment.

### <Embodiment of membrane separation system>

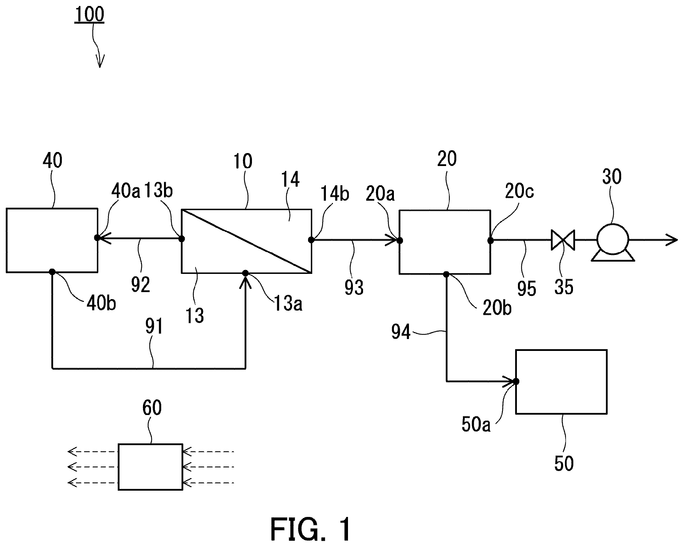

As shown in FIG. 1, a membrane separation system 100 of the present embodiment includes a membrane separation unit 10 having a pervaporation membrane, a condensation unit 20, and a decompression unit 30. The condensation unit 20 is disposed between the membrane separation unit 10 and the decompression unit 30.

The membrane separation unit 10 has the pervaporation membrane, and a feed space and a permeation space separated from each other by the pervaporation membrane. The pervaporation membrane separates a feed liquid S containing a volatile organic compound C into a permeated fluid S₁ and a non-permeated fluid S₂. The condensation unit 20 condenses the organic compound C contained in the permeated fluid S₁. The decompression unit 30 decompresses an inside of the permeation space of the membrane separation unit 10.

The feed liquid S contains the volatile organic compound C such as an alcohol. The feed liquid S is typically a fermented liquid. The fermented liquid is obtained by fermenting a carbon source, such as glucose or a synthesis gas, in an aqueous solution by using a microorganism. Therefore, in the case where the feed liquid S is a fermented liquid, the feed liquid S contains, in addition to the volatile organic compound C, a microorganism that generates the organic compound C. The microorganism that generates the organic compound C is typically a bacterium. Generally, in the process of fermenting a carbon source in an aqueous solution, a gas, such as carbon dioxide, is generated as a byproduct. Therefore, a gas is present as a dissolved gas G in the feed liquid S obtained by the fermentation. The gas G includes carbon dioxide. The feed liquid S contains, for example, water other than the organic compound C, the microorganism, and the gas G. The feed liquid S is typically an aqueous solution containing the organic compound C, the microorganism, and the gas G.

In the membrane separation system 100, the condensation unit 20 is disposed between the membrane separation unit 10 and the decompression unit 30. The decompression unit 30 decompresses the inside of the permeation space of the membrane separation unit 10 and an inside of the condensation unit 20. An operating condition of the decompression unit 30 is controlled in such a manner that a pressure P₁₀ in the permeation space of the membrane separation unit 10 has, during operation, a value larger than a minimum value of a pressure that the inside of the permeation space of the membrane separation unit 10 can reach during rated operation of the decompression unit 30. This makes it possible to reduce an amount of the permeated fluid S₁ to be discharged from the condensation unit 20 while condensing the organic compound C in the condensation unit 20, thereby making it possible to suppress a decrease in condensation efficiency of the condensation unit 20. As a result, efficiency in recovering the organic compound C is improved. The membrane separation system 100 of the present embodiment is particularly effective in the case where the feed liquid S is a fermented liquid. Note that the rated operation refers to operating the decompression unit 30 at a maximum output power.

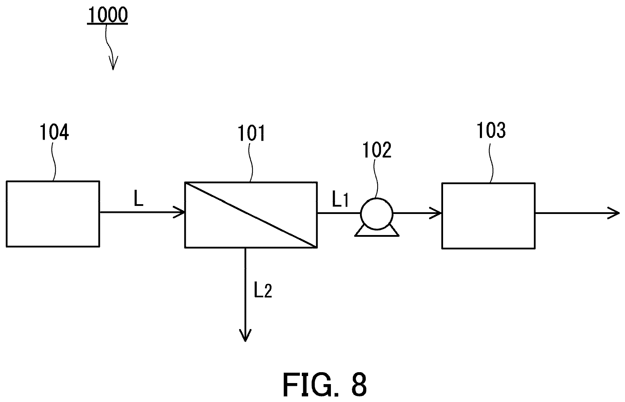

FIG. 8 is a schematic configuration diagram showing a conventional membrane separation system 1000 that uses the pervaporation method. The membrane separation system 1000 includes a membrane separation unit 101 having a pervaporation membrane, a decompression unit 102, and a condensation unit 103. The decompression unit 102 is provided between the membrane separation unit 101 and the condensation unit 103. Note that the reference numeral 104 indicates a tank that stores a feed liquid L to be supplied to the membrane separation unit 101. As described above, the pervaporation membrane even allows a gas contained in the feed liquid to permeate therethrough. Therefore, when the feed liquid L is separated into a permeated fluid L₁ and a non-permeated fluid L₂ with the pervaporation membrane of the membrane separation unit 101, a gas, such as carbon dioxide, remains in the permeated fluid L₁ that has been separated. In the membrane separation system 1000, the permeated fluid L₁ discharged from the membrane separation unit 101 is supplied to the condensation unit 103 as a gaseous emission from the decompression unit 102 while still containing the gas. Condensation efficiency of the condensation unit 103 depends on a partial pressure of a gaseous matter to be condensed. Therefore, the gas contained in the permeated fluid L₁ decreases the condensation efficiency of the condensation unit 103, and as a result, the efficiency in recovering the organic compound is decreased. The permeated fluid L₁ having failed to be condensed because of the presence of the gas is discharged from its system.

In the conventional membrane separation system 1000, the decompression unit 102 is operated in a state of rated operation. The present inventors have found that it is unnecessary to continue operating the decompression unit in the state of rated operation because the condensation by the condensation unit occurs in a configuration of a closed system and a pressure in the condensation unit is reduced due to a change in a volume of the organic compound at the time of condensing the organic compound. Furthermore, the present inventors have found that it is possible to improve the condensation efficiency of the condensation unit if the amount of the permeated fluid to be discharged from its system can be reduced. On the basis of these findings, the present inventors have found that by disposing the condensation unit 20 between the membrane separation unit 10 and the decompression unit 30, it is possible to control the operating condition of the decompression unit 30 in such a manner that the pressure P₁₀ in the permeation space of the membrane separation unit 10 has, during operation, a value larger than the minimum value of the pressure that the inside of the permeation space of the membrane separation unit 10 can reach during the rated operation of the decompression unit 30. When it is possible to control the operating condition of the decompression unit 30 in such a manner that the pressure P₁₀ in the permeation space of the membrane separation unit 10 has, during operation, a value larger than the minimum value of the pressure that the inside of the permeation space of the membrane separation unit 10 can reach during the rated operation of the decompression unit 30, it is possible to condense the organic compound C in the condensation unit 20 while reducing an amount of a gaseous emission from the decompression unit 30.

When the organic compound C is condensed in the condensation unit 20 and thereby a partial pressure of the organic compound C in the permeated fluid S₁ is reduced during operation, a volume of the organic compound C in a total volume of the inside of the condensation unit 20 is decreased. Thereby, an amount of the gas G to be discharged from the condensation unit 20 is decreased. That is, the organic compound C in the permeated fluid S₁ is condensed in the condensation unit 20, and thereby the discharge of the gas G from the condensation unit 20 is suppressed. As a result, an amount of the permeated fluid S₁ to be discharged from its system can be reduced.

The phrase "to control the operating condition of the decompression unit 30 in such a manner that the pressure P₁₀ in the permeation space of the membrane separation unit 10 has, during operation, a value larger than the minimum value of the pressure that the inside of the permeation space of the membrane separation unit 10 can reach during the rated operation of the decompression unit 30" is not limited to that the pressure P₁₀ in the permeation space of the membrane separation unit 10 must always have a value larger than the minimum value of the pressure that the inside of the permeation space of the membrane separation unit 10 can reach during the rated operation of the decompression unit 30. For example, in the case where the decompression unit 30 performs the intermittent operation or the low speed operation described later, there is a possibility that the pressure P₁₀ in the permeation space of the membrane separation unit 10 temporarily has a value equal to the minimum value of the pressure that the inside of the permeation space of the membrane separation unit 10 can reach during the rated operation of the decompression unit 30.

The operating condition of the decompression unit 30 may be controlled in such a manner that the pressure P₁₀ in the permeation space of the membrane separation unit 10 is, during operation, equal to or higher than a saturation vapor pressure of the permeated fluid S₁ at a cooling temperature of the condensation unit 20 while being equal to or lower than a saturation vapor pressure of the feed liquid S at an operating temperature of the membrane separation unit 10.

The operating condition of the decompression unit 30 may be controlled in such a manner that the pressure P₁₀ in the permeation space of the membrane separation unit 10 is in a range from 0.2 to 20.0 kPa during operation. Here, the operating temperature of the membrane separation unit 10 may be in a range from 20 to 40°C, and the cooling temperature of the condensation unit 20 may be in a range from -10 to -20°C. The operating temperature of the membrane separation unit 10 may be 30°C, and the cooling temperature of the condensation unit 20 may be -15°C. A decompression degree during operation in the case where a common vacuum device, such as a vacuum pump, is used is around several pascals to 100 pascals. In contrast, in the present embodiment, the pressure P₁₀ in the permeation space of the membrane separation unit 10 is suppressed to be low, and thus an energy-saving effect can also be expected.

The operating condition of the decompression unit 30 may be controlled in such a manner that the pressure P₁₀ in the permeation space of the membrane separation unit 10 is in a range from 0.5 to 10.0 kPa during operation. The operating condition of the decompression unit 30 may be controlled in such a manner that the pressure P₁₀ is in a range from 1.0 to 5.0 kPa.

The operating condition of the decompression unit 30 may be controlled in such a manner that a partial pressure Pc₁₀ of the organic compound C in the permeation space of the membrane separation unit 10 is in a predetermined range during operation. Specifically, the operating condition of the decompression unit 30 may be controlled in such a manner that the partial pressure Pc₁₀ of the organic compound C in the permeation space of the membrane separation unit 10 is, during operation, equal to or higher than a saturation vapor pressure Ec₂₀ of the organic compound C contained in the permeated fluid S₁ at the cooling temperature of the condensation unit 20 while being equal to or lower than a saturation vapor pressure Ec₁₀ of the organic compound C contained in the feed liquid S at the operating temperature of the membrane separation unit 10. That is, the operating condition of the decompression unit 30 may be controlled in such a manner that Ec₂₀ ≤ Pc₁₀ ≤ Ec₁₀ is satisfied during operation. Satisfying Ec₂₀ ≤ Pc₁₀ during operation suppresses occurrence of a situation where condensation fails to be carried out properly because the partial pressure of the organic compound C contained in the permeated fluid S₁ in the condensation unit 20 is too low and thus the permeated fluid S₁ is discharged from the decompression unit 30 in a state in which a whole amount of the permeated fluid S₁ remains evaporated. Satisfying Pc₁₀ ≤ Ec₁₀ during operation suppresses occurrence of a situation where pervaporation fails to occur because a partial pressure of the organic compound C contained in the feed liquid S in the membrane separation unit 10 is too high and thus the permeated fluid S₁ fails to be obtained.

It is possible to adjust the pressure P₁₀ in the permeation space of the membrane separation unit 10 by controlling a behavior of the decompression unit 30. The behavior of the decompression unit 30 is controlled and thereby the pressure P₁₀ in the permeation space of the membrane separation unit 10 may be adjusted to be in a range from 0.2 to 20.0 kPa during operation.

The behavior of the decompression unit 30 is controlled and thereby the partial pressure Pc₁₀ of the organic compound C in the permeation space of the membrane separation unit 10 may be adjusted to satisfy the above-mentioned range (Ec₂₀ ≤ Pc₁₀ ≤ Ec₁₀) during operation.

The decompression unit 30 may be a vacuum device such as a vacuum pump. The vacuum pump is typically a gas transport vacuum pump, and a reciprocating vacuum pump and a rotary vacuum pump, etc. can be mentioned. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps such as a roots dry pump, a claw dry pump, a screw dry pump, a turbo dry pump, and a scroll dry pump. The pump as the decompression unit 30 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly the pressure P₁₀ in the permeation space of the membrane separation unit 10.

The decompression unit 30 may perform intermittent operation in which a stop of operation and a start of operation are repeated alternately, or low speed operation in which the decompression unit 30 is operated at an output power less than the maximum output power. The decompression unit 30 performs the intermittent operation or the low speed operation, and thereby the pressure P₁₀ in the permeation space of the membrane separation unit 10 may be adjusted to be in a range from 0.2 to 20.0 kPa.

The decompression unit 30 performs the intermittent operation or the low speed operation, and thereby the partial pressure Pc₁₀ of the organic compound C in the permeation space of the membrane separation unit 10 may be adjusted to satisfy the above-mentioned range (Ec₂₀ ≤ Pc₁₀ ≤ Ec₁₀).

The intermittent operation refers to repeating alternately a stop of operation and a start of operation of the decompression unit 30. In the present embodiment, the "operation" in the stop of operation and the start of operation refers to the rated operation in which the decompression unit 30 is operated at the maximum output power. Therefore, the intermittent operation can be expressed in other words as an operation in which stop of the rated operation and the rated operation are repeated alternately. The intermittent operation can be composed of, for example, a stop of the rated operation for five minutes and the rated operation for one minute. A cycle (a repetition cycle) of the intermittent operation of the decompression unit 30 is not particularly limited.

The intermittent operation may include stopping the rated operation of the decompression unit 30 when the pressure P₁₀ in the permeation space of the membrane separation unit 10 falls below 0.2 kPa, and starting the rated operation of the decompression unit 30 when the pressure P₁₀ in the permeation space of the membrane separation unit 10 exceeds 20.0 kPa.

More specifically, the intermittent operation may include stopping the rated operation of the decompression unit 30 when the partial pressure Pc₁₀ of the organic compound C in the permeation space of the membrane separation unit 10 falls below the saturation vapor pressure Ec₂₀ of the organic compound C contained in the permeated fluid S₁ at the cooling temperature of the condensation unit 20 (Pc₁₀ < Ec₂₀), and starting the rated operation of the decompression unit 30 when the partial pressure Pc₁₀ of the organic compound C in the permeation space of the membrane separation unit 10 exceeds the saturation vapor pressure Ec₁₀ of the organic compound C contained in the feed liquid S at the operating temperature of the membrane separation unit 10 (Pc₁₀ > Ec₁₀).

The low speed operation refers to operating the decompression unit 30 at an output power less than the maximum output power. In contrast to the rated operation (a full load operation) in which the decompression unit 30 is operated at the maximum output power, the low speed operation can be expressed in other words as a partial load operation in which the decompression unit 30 is operated at an output power less than the maximum output power. An operating rotational speed of the decompression unit 30 in the low speed operation may change with time. For example, the operating rotational speed of the decompression unit 30 may be decreased gradually. For example, the low speed operation may be performed by varying the operating rotational speed of the decompression unit 30 by control of the inverter included in the decompression unit 30. A duration of the low speed operation of the decompression unit 30 is not particularly limited.

The low speed operation may include operating the decompression unit 30 at an output power less than the maximum output power when the pressure P₁₀ in the permeation space of the membrane separation unit 10 falls below 0.2 kPa, and operating the decompression unit 30 at the maximum output power when the pressure P₁₀ in the permeation space of the membrane separation unit 10 exceeds 20.0 kPa.

More specifically, the low speed operation may include operating the decompression unit 30 at an output power less than the maximum output power when the partial pressure Pc₁₀ of the organic compound C in the permeation space of the membrane separation unit 10 falls below the saturation vapor pressure Ec₂₀ of the organic compound C contained in the permeated fluid S₁ at the cooling temperature of the condensation unit 20 (Pc₁₀ < Ec₂₀), and operating the decompression unit 30 at the maximum output power when the partial pressure Pc₁₀ of the organic compound C in the permeation space of the membrane separation unit 10 exceeds the saturation vapor pressure Ec₁₀ of the organic compound C contained in the feed liquid S at the operating temperature of the membrane separation unit 10 (Pc₁₀ > Ec₁₀).

The condensation unit 20 condenses the organic compound C by cooling the permeated fluid S₁ that is a gaseous matter and that has been delivered from the membrane separation unit 10. In other words, the condensation unit 20 allows the permeated fluid S₁ that is a gaseous matter to be liquefied so that a condensed fluid S₃ can be obtained. The condensed fluid S₃ is a fluid that is a liquid and that contains the organic compound C. The condensation unit 20 is, for example, a gas-liquid heat exchanger that causes heat exchange between a cooling medium, such as an antifreeze, and the permeated fluid S₁ that is a gaseous matter.

The membrane separation system 100 may further include, between the condensation unit 20 and the decompression unit 30, a pressure regulating valve 35 that adjusts the pressure P₁₀ in the permeation space of the membrane separation unit 10. As a method for adjusting the pressure P₁₀ in the permeation space of the membrane separation unit 10, there can be mentioned, for example, a method for introducing outside air into the decompression unit 30, and a method for adjusting a flow rate with a pressure regulating valve provided at a position preceding the decompression unit 30. The use of the pressure regulating valve 35 makes it possible to avoid an increase in the amount of the gaseous emission due to the introduction of the outside air into the decompression unit 30.

The membrane separation system 100 may include a pressure sensor (not shown) that measures the pressure P₁₀ in the permeation space of the membrane separation unit 10 or the partial pressure Pc₁₀ of the organic compound C in the permeation space of the membrane separation unit 10. Based on a result of a measurement by the pressure sensor, the behavior of the decompression unit 30 is controlled and thereby the pressure P₁₀ in the permeation space of the membrane separation unit 10 may be adjusted to be in a range from 0.2 to 20.0 kPa. Based on a result of a measurement by the pressure sensor, the behavior of the decompression unit 30 is controlled and thereby the partial pressure Pc₁₀ of the organic compound C in the permeation space of the membrane separation unit 10 may be adjusted to satisfy the above-mentioned range (Ec₂₀ ≤ Pc₁₀ ≤ Ec₁₀).

In the membrane separation system 100, the operating condition of the decompression unit 30 may be controlled in such a manner that a content C_{G} of the gas G in the permeated fluid S₁ that is a gaseous matter is in a predetermined range during operation. The operating condition of the decompression unit 30 may be controlled in such a manner that the content C_{G} of the gas G in the permeated fluid S₁ in the condensation unit 20 is in a predetermined range during operation. As described above, in the condensation unit 20, the organic compound C is condensed and thereby the partial pressure of the organic compound C in the permeated fluid S₁ is reduced, and thus it is possible to reduce the amount of the permeated fluid S₁ to be discharged from the condensation unit 20 also by adjusting the content C_{G} of the gas G in the permeated fluid S₁ in the condensation unit 20.

It is possible to adjust the content C_{G} of the gas G in the permeated fluid S₁ that is a gaseous matter by controlling the behavior of the decompression unit 30, in the same manner as the pressure P₁₀ in the permeation space of the membrane separation unit 10 or the partial pressure Pc₁₀ of the organic compound C in the permeation space of the membrane separation unit 10. That is, the behavior of the decompression unit 30 is controlled and thereby the content C_{G} of the gas G in the permeated fluid S₁ that is a gaseous matter may be adjusted to be in a predetermined range during operation.

In the membrane separation system 100, the adjustment of the content C_{G} of the gas G in the permeated fluid S₁ that is a gaseous matter may be made instead of the adjustment of the pressure P₁₀ in the permeation space of the membrane separation unit 10 or the adjustment of the partial pressure Pc₁₀ of the organic compound C in the permeation space of the membrane separation unit 10, or in addition to the control of the pressure P₁₀ in the permeation space of the membrane separation unit 10 or the control of the partial pressure Pc₁₀ of the organic compound C in the permeation space of the membrane separation unit 10.

The membrane separation system 100 may further include a gas sensor (not shown) that measures the content C_{G} of the gas G in the permeated fluid S₁ that is a gaseous matter. The gas sensor may be a gas sensor that measures the content C_{G} of the gas G in the permeated fluid S₁ in the condensation unit 20. Based on a result of a measurement by the gas sensor, the behavior of the decompression unit 30 is controlled and thereby the content C_{G} of the gas G in the permeated fluid S₁ that is a gaseous matter may be adjusted to be in a predetermined range.

The membrane separation system 100 further includes a tank 40 in addition to the membrane separation unit 10, the condensation unit 20, and the decompression unit 30. The tank 40 stores the feed liquid S to be supplied to the membrane separation unit 10. The tank 40 may be a fermenter for generating the organic compound C by fermentation of a carbon source by a microorganism.

The membrane separation system 100 further includes a fermented liquid feed passage 91, a non-permeated fluid discharge passage 92, a permeated fluid discharge passage 93, and a condensed fluid discharge passage 94 each serving as a passage for a fluid.

The fermented liquid feed passage 91 is a passage for supplying the feed liquid S from the tank 40 to the membrane separation unit 10 during operation, and is connected to an outlet 40b of the tank 40 and a fermented liquid inlet 13a of the membrane separation unit 10.

The non-permeated fluid discharge passage 92 is a passage for discharging the non-permeated fluid S₂ from the membrane separation unit 10 during operation, and is connected to a feed space outlet 13b of the membrane separation unit 10. The non-permeated fluid discharge passage 92 may be provided, for example, with a pump for controlling a flow rate of the non-permeated fluid S₂. The non-permeated fluid discharge passage 92 may not be provided with a pump.

The non-permeated fluid discharge passage 92 may be connected to an inlet 40a of the tank 40 and configured to deliver the non-permeated fluid S₂ to the tank 40 during operation. That is, the membrane separation system 100 may have a configuration in which the non-permeated fluid S₂ and the feed liquid S are mixed in the tank 40 and circulate through the fermented liquid feed passage 91 and the non-permeated fluid discharge passage 92 during operation. In the case where the non-permeated fluid S₂ is delivered to the tank 40, the feed liquid S is mixed with the non-permeated fluid S₂ and a content of the organic compound C in the feed liquid S decreases in the tank 40. In the case where the tank 40 is a fermenter, a decrease in the content of the organic compound C in the feed liquid S can inhibit the fermentation by the microorganism from stopping, thereby making it possible to produce a fermented product continuously.

The permeated fluid discharge passage 93 is a passage for discharging the permeated fluid S₁ from the membrane separation unit 10 during operation, and is connected to a permeation space outlet 14b of the membrane separation unit 10 and a permeated fluid inlet 20a of the condensation unit 20. The condensed fluid discharge passage 94 is a passage for discharging the condensed fluid S₃ from the condensation unit20 during operation, and is connected to a condensed fluid outlet 20b of the condensation unit 20.

The membrane separation system 100 may further include a recovery unit 50. The recovery unit 50 recovers the condensed fluid S₃ delivered from the condensation unit 20 and can, for example, store the condensed fluid S₃. The recovery unit 50 is, for example, a tank that stores the condensed fluid S₃. In this case, the condensed fluid discharge passage 94 is connected to an inlet 50a of the recovery unit 50.

The membrane separation system 100 further includes a discharge passage 95 serving as a passage for a fluid.

The discharge passage 95 is connected to a gaseous emission outlet 20c of the condensation unit 20. The discharge passage 95 is provided with the decompression unit 30. The pressure regulating valve 35 may be disposed between the condensation unit 20 and the decompression unit 30.

The membrane separation system 100 may further include a control unit 60 that controls each member of the membrane separation system 100. The control unit 60 is, for example, a DSP (Digital Signal Processor) including an A/D conversion circuit, an input/output circuit, an arithmetic circuit, a storage device, etc. A program for operating properly the membrane separation system 100 is stored in the control unit 60. For example, the control unit 60 controls the behavior of the decompression unit 30 in such a manner that the pressure P₁₀ in the permeation space of the membrane separation unit 10 can be adjusted to be in a range from 0.2 to 20.0 kPa. For example, the control unit 60 controls the behavior of the decompression unit 30 in such a manner that the partial pressure Pc₁₀ of the organic compound C in the permeation space of the membrane separation unit 10 can be adjusted to satisfy the above-mentioned range (Ec₂₀ ≤ Pc₁₀ ≤ Ec₁₀).

Each passage of the membrane separation system 100 is composed of, for example, a metal or resin pipe unless otherwise noted.

Next, the membrane separation unit 10 included in the membrane separation system 100 of the present embodiment will be described in further detail.

### [Membrane separation unit]

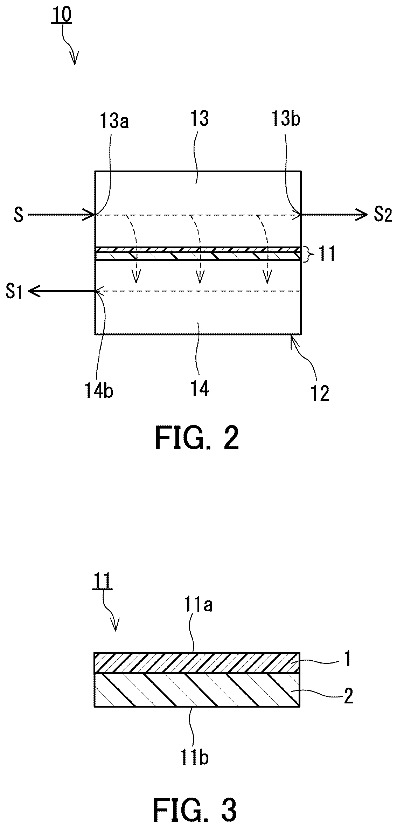

FIG. 2 is a schematic cross-sectional view showing an example of the membrane separation unit 10. As shown in FIG. 2, the membrane separation unit 10 includes a pervaporation membrane 11 and a container 12. The container 12 has a first chamber 13 and a second chamber 14. The first chamber 13 functions as the feed space to which the feed liquid S is supplied. The second chamber 14 functions as the permeation space to which the permeated fluid S₁ is supplied. The permeated fluid S₁ is obtained by allowing the feed liquid S to permeate through the pervaporation membrane 11.

The pervaporation membrane 11 is disposed in the container 12. In the container 12, the pervaporation membrane 11 separates the first chamber 13 and the second chamber 14 from each other. The pervaporation membrane 11 extends from one of a pair of wall surfaces of the container 12 to the other.

The first chamber 13 has the feed space inlet 13a and the feed space outlet 13b. The second chamber 14 has the permeation space outlet 14b. The feed space inlet 13a is an opening for supplying the feed liquid S to the feed space (the first chamber 13). The permeation space outlet 14b is an opening for discharging the permeated fluid S₁ from the permeation space (the second chamber 14). The feed space outlet 13b is an opening for discharging, from the feed space (the first chamber 13), the feed liquid S (the non-permeated fluid S₂) not having permeated through the pervaporation membrane 11. The feed space inlet 13a, the feed space outlet 13b, and the permeation space outlet 14b are formed, for example, in wall surfaces of the container 12.

The membrane separation unit 10 is suitable for a flow-type (continuous-type) membrane separation method. However, the membrane separation unit 10 may be used for a batch-type membrane separation method.

### (Pervaporation membrane)

As described above, the pervaporation membrane 11 is typically a membrane (a separation membrane) that allows the organic compound C contained in the feed liquid S to preferentially permeate therethrough. The pervaporation membrane 11 allows the permeated fluid S₁ that is a gaseous matter and contains the organic compound C to be generated by a pervaporation method, for example.

As shown in FIG. 3, the pervaporation membrane 11 includes, for example, a separation functional layer 1 and a porous support member 2 supporting the separation functional layer 1. The pervaporation membrane 11 may further include a protective layer (not shown) that protects the separation functional layer 1. The separation functional layer 1 is in direct contact with the porous support member 2, for example. For example, the pervaporation membrane 11 has a principal surface 11a, on the separation functional layer side, that is exposed to the first chamber 13 and a principal surface 11b, on the porous support member side, that is exposed to the second chamber 14.

### (Separation functional layer)

The separation functional layer 1 is typically a layer that allows the organic compound C contained in the feed liquid S to preferentially permeate therethrough. The separation functional layer 1 includes a hydrophobic material, for example. In the present description, the term "hydrophobic material" refers to, for example, a material that has a static contact angle exceeding 90° with respect to water when a 10 µL drop of the water (temperature 25°C) is dropped on a surface of a specimen composed of the material. Note that the static contact angle with respect to water can be measured using a commercially available contact angle meter.

Examples of the hydrophobic material include a compound having a siloxane bond (a Si-O-Si bond), an olefin-based polymer, an oil, and a fluorine-based compound. The separation functional layer 1 preferably includes a compound having a siloxane bond as the hydrophobic material. The compound having a siloxane bond is typically a silicone-based polymer. The silicone-based polymer may be a solid or a liquid at 25°C. Specific examples of the silicone-based polymer include polydimethylsiloxane (PDMS). Specific examples of the olefin-based polymer include polyethylene and polypropylene. Examples of the oil include a hydrocarbon-based oil such as liquid paraffin. Examples of the fluorine-based compound include polytetrafluoroethylene (PTFE), polyvinylidene fluoride (PVDF), and tetrafluoroethylene-perfluoroalkyl vinyl ether copolymer (PFA). These hydrophobic materials can be used alone or two or more of them can be used in combination.

The separation functional layer 1 may include the hydrophobic material as a main component, or may be composed substantially of the hydrophobic material alone. The term "main component" means a component having a largest content in the separation functional layer 1 in terms of weight ratio.

The separation functional layer 1 may include a matrix including the hydrophobic material and a filler dispersed in the matrix. The filler is buried in the matrix. In the matrix, all particles of the filler may be spaced from each other or may aggregate partially.

The filler includes, for example, an inorganic material such as zeolite, silica, or bentonite. The zeolite included in the filler is preferably a high-silica zeolite having a high ratio of silica with respect to alumina. Having high resistance to hydrolysis, the high-silica zeolite is suitably used for separating the feed liquid S. Examples of the high-silica zeolite to be used include HSZ (registered trademark) available from Tosoh Corporation, HiSiv (registered trademark) available from UNION SHOWA K.K., USKY available from UNION SHOWA K.K., and Zeoal (registered trademark) available from Nakamura Choukou Co., Ltd.

The filler may include a metal organic framework (MOF). The metal organic framework is also referred to as a porous coordination polymer (PCP). The metal organic framework is preferably hydrophobic. The metal organic framework includes a metal ion and an organic ligand, for example. Examples of the metal ion include a Zn ion. The organic ligand includes an aromatic ring, for example. Examples of the aromatic ring included in the organic ligand include an imidazole ring. Examples of the organic ligand include 2-methylimidazole. Specific examples of the metal organic framework include ZIF-8.

The filler is in the form of particles, for example. The term "form of particles" herein includes spherical, elliptical, flaky, and fibrous forms. An average particle diameter of the filler is, for example, but not particularly limited to, 50 µm or less, preferably 20 µm or less, and more preferably 10 µm or less. The lower limit of the average particle diameter of the filler is 0.01 µm, for example. The average particle diameter of the filler can be determined by the following method, for example. First, a cross-section of the separation functional layer 1 is observed using a transmission electron microscope. The area of a specific particle of the filler on the resulting electron microscope image is calculated by image processing. The diameter of a circle having the same area as the calculated area is regarded as the particle diameter (the diameter of the particle) of the specific filler particle. The particle diameter is calculated for any number (at least 50) of the filler particles, and the average of the calculated values is regarded as the average particle diameter of the filler.

A content of the filler in the separation functional layer 1 is, for example, 10 wt% or more, preferably 30 wt% or more, and more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

The separation functional layer 1 has a thickness of, for example, 200 µm or less, preferably 100 µm or less, and more preferably 80 µm or less. The separation functional layer 1 may have a thickness of 1.0 µm or more, 10 µm or more, or 30 µm or more.

The separation functional layer 1 may have a microporous structure with an average pore diameter of less than 0.01 µm, but may be a dense layer having no pore on its surface.

### (Porous support member)

Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 2 may be a combination of two or more of these materials.

The porous support member 2 has an average pore diameter of 0.01 to 0.4 µm, for example. A thickness of the porous support member 2 is, for example, but not particularly limited to, 10 µm or more, preferably 50 µm or more, and more preferably 100 µm or more. The thickness of the porous support member 2 is, for example, 300 µm or less, and preferably 200 µm or less.

### (Protective layer)

The protective layer covers a surface of the separation functional layer 1, for example. A material of the protective layer is, for example, but not particularly limited to, a silicone resin. The material of the protective layer may be the same as that of the matrix of the separation functional layer 1. A thickness of the protective layer is, for example, but not particularly limited to, 0.5 µm or more, preferably 1 µm or more, more preferably 5 µm or more, and still more preferably 10 µm or more. The thickness of the protective layer is, for example, 100 µm or less, preferably 50 µm or less, and more preferably 30 µm or less.

### (Method for producing pervaporation membrane)

The pervaporation membrane 11 can be produced by, for example, forming the separation functional layer 1 on the porous support member 2. Specifically, a coating liquid containing the materials of the separation functional layer 1 is prepared first. The coating liquid may contain, in addition to the filler, a dispersant for dispersing the filler in the coating liquid. In the case where the coating liquid contains the compound having a siloxane bond, the coating liquid may further contain a catalyst for curing the compound. Next, the coating liquid is applied onto the porous support member 2 to obtain a coating. The coating is dried to obtain the separation functional layer 1.

### <Embodiment of method for operating membrane separation system>

A method for operating the membrane separation system 100 includes: separating the feed liquid S containing the volatile organic compound C and the gas G into the permeated fluid S₁ and the non-permeated fluid S₂ with the pervaporation membrane of the membrane separation unit 10 (step 1); and condensing, with the condensation unit 20, the organic compound C contained in the permeated fluid S₁ (step 2). The step 1 includes controlling the operating condition of the decompression unit 30 in such a manner that the pressure P₁₀ in the permeation space of the membrane separation unit 10 has a value larger than the minimum value of the pressure that the inside of the permeation space of the membrane separation unit 10 can reach during the rated operation of the decompression unit 30.

As described above, in the case where the feed liquid S is a fermented liquid, the feed liquid S contains the volatile organic compound C and the microorganism that generates the organic compound C. The feed liquid S contains, for example, water other than the organic compound C, the microorganism, and the gas G. The feed liquid S is typically an aqueous solution containing the organic compound C, the microorganism, and the gas G.

The organic compound C included in the feed liquid S is not particularly limited as long as it has volatility. In the present description, the term "organic compound having volatility" refers to, for example, an organic compound that has a boiling point of 20°C to 260°C under an atmospheric pressure (101.325 kPa). Note that the organic compound C allows, for example, an aqueous phase containing water as a main component and an organic phase having a content of the organic compound C higher than that in the aqueous phase to be generated when a concentration of the organic compound C is high in the aqueous solution.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, a functional group including an oxygen atom, such as a hydroxyl group, a carbonyl group, an ether group, and an ester group. In the organic compound C, the number of the functional groups including an oxygen atom is typically one.

Examples of the organic compound C include an alcohol, ketone, and ester, and preferred is an alcohol. In the case where the organic compound C is an alcohol, the organic compound C is likely to be compatible with water and thus unlikely to cause unevenness in an environment in its system. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol, and preferred is n-butanol. N-butanol is a compound that allows two phases (an aqueous phase and an organic phase) to be generated from an aqueous solution thereof when a content of the compound in the aqueous solution is around 8 wt% or more. Therefore, in the case where the organic compound C is n-butanol, it is possible, by adjusting the content of the organic compound C in the permeated fluid S₁ to be around 8 wt% or more, for example, to generate an aqueous phase and an organic phase in the condensed fluid S₃. In this case, it is possible to refine the condensed fluid S₃ easily by separating the aqueous phase and the organic phase from each other. Examples of the aryl alcohol include phenol.

The ketone may be dialkylketone composed only of an alkyl group and a carbonyl group. Examples of the dialkylketone include methyl ethyl ketone (MEK) and acetone.

The ester may be aliphatic alkylester composed only of an alkyl group and an ester group. Examples of the aliphatic alkylester include ethyl acetate.

Note that the organic compound C is not limited to those mentioned above. The organic compound C may be aromatic hydrocarbon such as benzene, toluene, or xylene.

The feed liquid S may contain one kind of the organic compound C, or two or more kinds of the organic compounds C. The content of the organic compound C in the feed liquid S is, for example, 50 wt% or less, and may be 30 wt% or less, 10 wt% or less, 5 wt% or less, 2 wt% or less, or even 1 wt% or less. The lower limit of the content of the organic compound C is, for example, but not particularly limited to, 0.01 wt%.

The organic compound C may be a fermented product generated by fermentation of a carbon source by a microorganism. The organic compound C is preferably an alcohol (a bioalcohol) generated by a microorganism.

The feed liquid S may further contain an additional component, such as a carbon source, a nitrogen source, or an inorganic ion, other than the water, the organic compound C, the microorganism, and the gas G. Examples of the carbon source include polysaccharides such as starch, and monosaccharides such as glucose.

A specific method for executing the step 1 will be described by referring to the membrane separation unit 10 shown in FIG. 2 as an example. In the step1, the feed liquid S is first supplied to the first chamber 13 of the membrane separation unit 10 via the feed space inlet 13a. This makes it possible to bring the feed liquid S into contact with one surface (the principal surface 11a, for example) of the pervaporation membrane 11.

Next, in a state in which the feed liquid S is in contact with one surface of the pervaporation membrane 11, a space adjacent to another surface (the principal surface 11b, for example) of the pervaporation membrane 11 is decompressed. Specifically, an inside of the second chamber 14 is decompressed via the permeation space outlet 14b. The inside of the second chamber 14 can be decompressed by the decompression unit 30. A pressure in the second chamber 14 is, for example, 50 kPa or less, and may be 20 kPa or less, 10 kPa or less, 5 kPa or less, 3 kPa or less, or even 2 kPa or less.

Decompressing the inside of the second chamber 14 makes it possible to obtain, on the side of the other surface of the pervaporation membrane 11, the permeated fluid S₁ having a high content of the organic compound C. In other words, the permeated fluid S₁ is supplied to the second chamber 14. In the second chamber 14, the permeated fluid S₁ is typically a gaseous matter. The permeated fluid S₁ is discharged outside the membrane separation unit 10 via the permeation space outlet 14b. The permeated fluid S₁ passes through the permeated fluid discharge passage 93 and is supplied to the condensation unit 20 via the permeated fluid inlet 20a.

On the other hand, the content of the organic compound C in the feed liquid S gradually decreases from the feed space inlet 13a to the feed space outlet 13b in the first chamber 13. The feed liquid S (the non-permeated fluid S₂) processed in the first chamber 13 is discharged outside the membrane separation unit 10 via the feed space outlet 13b. The non-permeated fluid S₂ is typically a liquid. The non-permeated fluid S₂ passes through the non-permeated fluid discharge passage 92 and is supplied to the tank 40 via the inlet 40a.

In the step 1, the pervaporation membrane 11 of the membrane separation unit 10 allows the organic compound C contained in the feed liquid S to preferentially permeate therethrough. Accordingly, the permeated fluid S₁ obtained by operation of the membrane separation unit 10 has a content of the organic compound C higher than that in the feed liquid S supplied to the membrane separation unit 10. A ratio of the content (wt%) of the organic compound C in the permeated fluid S₁ with respect to the content (wt%) of the organic compound C in the feed liquid S is not particularly limited.

The step 1 makes it possible, for example, to produce the permeated fluid S₁ having a high content of the organic compound C. In other words, the step 1 makes it possible to obtain the organic compound C as the permeated fluid S₁.

The step 1 includes controlling the operating condition of the decompression unit 30 in such a manner that the pressure P₁₀ in the permeation space of the membrane separation unit 10 has a value larger than the minimum value of the pressure that the inside of the permeation space of the membrane separation unit 10 can reach during the rated operation of the decompression unit 30. This makes it possible to condense the organic compound C in the condensation unit 20 while reducing the amount of the gaseous emission from the decompression unit 30, thereby making it possible to suppress a decrease in the condensation efficiency of the condensation unit 20. As a result, the efficiency in recovering the organic compound C is improved.

In the step 1, the intermittent operation or the low speed operation of the decompression unit 30 is performed and thereby the pressure P₁₀ in the permeation space of the membrane separation unit 10 may be controlled to be in a range from 0.2 to 20.0 kPa.

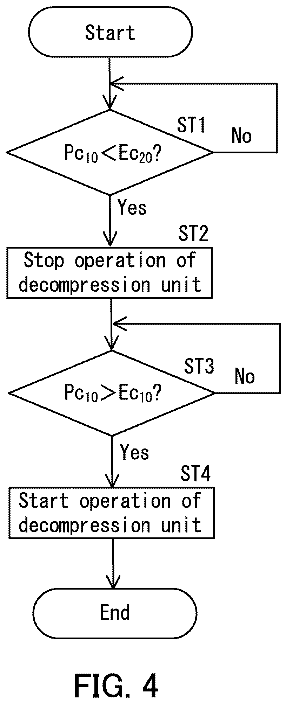

In the step 1, the intermittent operation or the low speed operation of the decompression unit 30 is performed and thereby the partial pressure Pc₁₀ of the organic compound C in the permeation space of the membrane separation unit 10 may be adjusted to satisfy the above-mentioned range (Ec₂₀ ≤ Pc₁₀ ≤ Ec₁₀). Hereinafter, examples of the controls of the intermittent operation and the low speed operation of the decompression unit 30 in accordance with the partial pressure Pc₁ of the organic compound C in the permeation space of the membrane separation unit 10 will be explained by reference to FIG. 4 to FIG. 7.

### (Control of intermittent operation)

FIG. 4 is a flow chart showing the control of the intermittent operation of the decompression unit 30.

First, it is determined whether or not the partial pressure Pc₁₀ of the organic compound C in the permeation space of the membrane separation unit 10 is below the saturation vapor pressure Ec₂₀ of the organic compound C contained in the permeated fluid S₁ at the cooling temperature of the condensation unit 20 (step ST1). In one specific example, the saturation vapor pressure Ec₂₀ is 0.2 kPa. However, the saturation vapor pressure Ec₂₀ is not particularly limited. For example, when the rated operation of the decompression unit 30 is continued, the partial pressure Pc₁₀ reduces and falls below the saturation vapor pressure Ec₂₀.

The sequence of the step ST1 is repeated until the partial pressure Pc₁₀ falls below the saturation vapor pressure Ec₂₀. When the partial pressure Pc₁₀ is below the saturation vapor pressure Ec₂₀, the operation of the decompression unit 30 is stopped (step ST2). The stopping of the operation of the decompression unit 30 increases the partial pressure Pc₁₀.

Next, it is determined whether or not the partial pressure Pc₁₀ of the organic compound C in the permeation space of the membrane separation unit 10 is higher than the saturation vapor pressure Ec₁₀ of the organic compound C contained in the feed liquid S at the operating temperature of the membrane separation unit 10 (step ST3). In one specific example, the saturation vapor pressure Ec₁₀ is 20.0 kPa. However, the saturation vapor pressure Ec₁₀ is not particularly limited. For example, when time passes while the operation of the decompression unit 30 remains stopped, the partial pressure Pc₁₀ increases and exceeds the saturation vapor pressure Ec₁₀.

The sequence of the step ST3 is repeated until the partial pressure Pc₁₀ exceeds the saturation vapor pressure Ec₁₀. When the partial pressure Pc₁₀ is higher than the saturation vapor pressure Ec₁₀, the operation of the decompression unit 30 is started (step ST4). The starting of the operation of the decompression unit 30 reduces the partial pressure Pc₁₀.

The control of the intermittent operation of the decompression unit 30 may be performed by the control unit 60. In this case, the control unit 60 executes each step of the flow chart in FIG. 4 in a predetermined cycle (a repetition cycle).

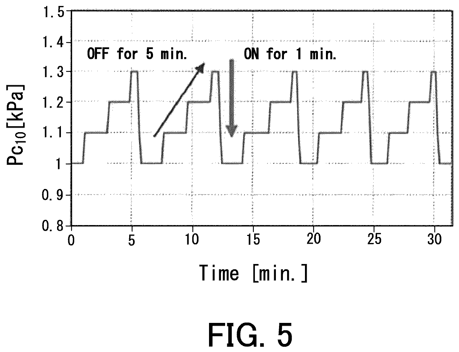

FIG. 5 is a timing chart showing an example of the intermittent operation. In FIG. 5, the vertical axis indicates the partial pressure Pc₁₀ and the horizontal axis indicates time. As shown in FIG. 5, the intermittent operation may be composed of a stop of the rated operation for five minutes and the rated operation for one minute. The cycle (the repetition cycle) of the intermittent operation of the decompression unit 30 is not particularly limited as long as the operating condition of the decompression unit 30 is controlled in such a manner that Ec₂₀ ≤ Pc₁₀ ≤ Ec₁₀ is satisfied.

### (Control of low speed operation)

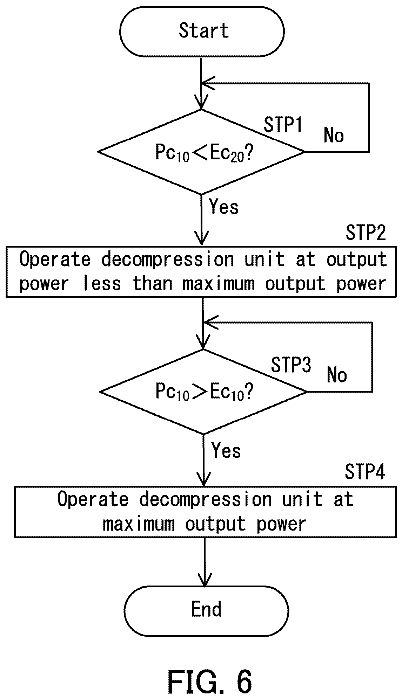

The control of the low speed operation of the decompression unit 30 will be described in further detail by reference to FIG. 6. FIG. 6 a flow chart showing the control of the low speed operation of the decompression unit 30.

First, it is determined whether or not the partial pressure Pc₁₀ of the organic compound C in the permeation space of the membrane separation unit 10 is below the saturation vapor pressure Ec₂₀ of the organic compound C contained in the permeated fluid S₁ at the cooling temperature of the condensation unit 20 (step STP1). In one specific example, the saturation vapor pressure Ec₂₀ is 0.2 kPa. However, the saturation vapor pressure Ec₂₀ is not particularly limited. For example, when the rated operation of the decompression unit 30 is continued, the partial pressure Pc₁₀ reduces and falls below the saturation vapor pressure Ec₂₀.

The sequence of the step STP1 is repeated until the partial pressure Pc₁₀ falls below the saturation vapor pressure Ec₂₀. When the partial pressure Pc₁₀ is below the saturation vapor pressure Ec₂₀, the decompression unit 30 is operated at the maximum output power (STP2). That is, the low speed operation of the decompression unit 30 is performed. The operating of the decompression unit 30 at the maximum output power increases the partial pressure Pc₁₀.

Next, it is determined whether or not the partial pressure Pc₁₀ of the organic compound C in the permeation space of the membrane separation unit 10 is higher than the saturation vapor pressure Ec₁₀ of the organic compound C contained in the feed liquid S at the operating temperature of the membrane separation unit 10 (STP3). In one specific example, the saturation vapor pressure Ec₁₀ is 20.0 kPa. However, the saturation vapor pressure Ec₁₀ is not particularly limited. For example, when the decompression unit 30 is being operated at the maximum output power continuously, the partial pressure Pc₁₀ increases and exceeds the saturation vapor pressure Ec₁₀.

The sequence of the step STP3 is repeated until the partial pressure Pc₁₀ exceeds the saturation vapor pressure Ec₁₀. When the pressure P₁₀ is higher than the saturation vapor pressure E₁₀, the decompression unit 30 is operated at the maximum output power (STP4). That is, the rated operation of the decompression unit 30 is performed. The operating of the decompression unit 30 at the maximum output power reduces the partial pressure Pc₁₀.

The control of the low speed operation of the decompression unit 30 may be performed by the control unit 60. In this case, the control unit 60 executes each step of the flow chart in FIG. 6 in a predetermined cycle (a repetition cycle).

The control unit 60 may control the inverter included in the decompression unit 30 so as to vary the operating rotational speed of the decompression unit 30, and thereby the low speed operation may be performed. The performing of the low speed operation makes it possible to reduce the amount of the gaseous emission from the decompression unit 30.

The method for operating the membrane separation system 100 further includes condensing, with the condensation unit 20, the organic compound C contained in the permeated fluid S₁ that is a gaseous matter (step 3). The step 3 makes it possible to liquefy the permeated fluid S₁ that is a gaseous matter so as to obtain the condensed fluid S₃. The condensed fluid S₃ is a fluid that is a liquid and that contains the organic compound C.

### <Embodiment of method for producing organic compound>

A method for producing an organic compound of the present embodiment is a method for producing an organic compound using the membrane separation unit 10, the condensation unit 20, and the decompression unit 30. The condensation unit 20 is disposed between the membrane separation unit 10 and the decompression unit 30. The method for producing an organic compound of the present embodiment includes: separating the feed liquid S containing the volatile organic compound C and the gas G into the permeated fluid S₁ and the non-permeated fluid S₂ with the pervaporation membrane of the membrane separation unit 10; condensing, with the condensation unit 20, the organic compound C contained in the permeated fluid S₁; and recovering the organic compounds C. The separating includes controlling the operating condition of the decompression unit 30 in such a manner that the pressure P₁₀ in the permeation space of the membrane separation unit 10 has a value larger than the minimum value of the pressure that the inside of the permeation space of the membrane separation unit 10 can reach during the rated operation of the decompression unit 30.

In the method for producing an organic compound of the present embodiment, the organic compound C may be an alcohol. The method for producing an organic compound of the present embodiment makes it possible to efficiently separate a volatile alcohol from the feed liquid S₀ containing the alcohol.

### [Modification of membrane separation unit]

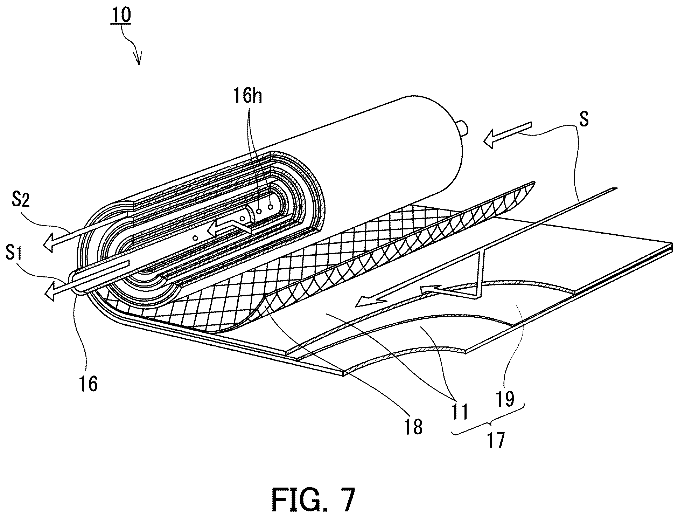

The membrane separation unit 10 may be a spiral membrane element, a hollow fiber membrane element, a disk tube membrane element in which a plurality of pervaporation membranes are laminated, a plate-and-frame membrane element, or the like. FIG. 7 is a developed perspective view showing schematically a spiral membrane element. The membrane separation unit 10 may be a spiral membrane element as shown in FIG. 7. The membrane separation unit 10 (the membrane element) in FIG.7 includes a central tube 16, and a membrane leaf 17 that has the pervaporation membrane 11 and is wound around the central tube 16.

The central tube 16 has a cylindrical shape. The central tube 16 has a surface with a through hole 16h formed therein to allow the permeated fluid S₁ to flow into the central tube 16. The number of the through holes 16h is not particularly limited and may be one, or two or more. Examples of a material of the central tube 16 include: a resin such as an acrylonitrile-butadiene-styrene copolymer resin (an ABS resin), a polyphenylene ether resin (a PPE resin), or a polysulfone resin (a PSF resin); and a metal such as stainless steel or titanium. The central tube 16 has an inner diameter in a range from, for example, 20 to 100 mm.

The membrane separation unit 10 has a plurality of the membrane leaves 17. Each of the membrane leaves 17 includes the pervaporation membrane 11 and a permeation-side flow passage material 19. For example, each of the membrane leaves 17 has two pieces of the pervaporation membranes 11. The two pieces of the pervaporation membranes 11 are stacked with each other and sealed on three sides in such a manner as to have a bag-like structure. The permeation-side flow passage material 19 is disposed between the two pieces of the pervaporation membranes 11 in such a manner as to be positioned inside the bag-like structure. The permeation-side flow passage material 19 secures, between the two pieces of the pervaporation membranes 11, a space (the permeation space) serving as a flow passage for the permeated fluid S₁. As just described above, the permeation-side flow passage material 19 is combined with the pervaporation membrane 11 and used. The number of the membrane leaves 17 is, for example, but not particularly limited to, 2 to 30.

The membrane separation unit 10 further has a feed-side flow passage material 18. The feed-side flow passage material 18 is positioned outside the above-mentioned bag-like structure and is laminated on the membrane leaf 17. Specifically, a plurality of the feed-side flow passage materials 18 and the plurality of the membrane leaves 17 are laminated alternately. The feed-side flow passage material 18 secures, between the membrane leaf 17 and the membrane leaf 17, a space (the feed space) serving as a flow passage for the feed liquid S.

As the feed-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

An outer circumferential surface of the membrane element is composed of a shell (not shown) made from a material through which a fluid cannot permeate. The shell may be made from FRP (fiber reinforced plastic). The membrane element may be accommodated in a casing (not shown).

The membrane separation unit 10 (the membrane element) in FIG. 7 can be operated by the following method, for example. First, the feed liquid S is supplied into an end of the wound membrane leaf 17. A space inside the central tube 16 is decompressed. The decompression can be carried out by the decompression unit 30. The permeated fluid S₁ having permeated through the pervaporation membrane 11 of the membrane leaf 17 thereby moves into the central tube 16. The permeated fluid S₁ is discharged outside via the central tube 16. The feed liquid S (the non-permeated fluid S₂) processed by the membrane separation unit 10 is discharged outside from another end of the wound membrane leaf 17.

### <Modification of membrane separation system>

The membrane separation system 100 of the present embodiment may include a plurality of the membrane separation units 10, and the plurality of the membrane separation units 10 may be connected to each other in series or in parallel. In the present description, the phrase "a plurality of the membrane separation units 10 are connected to each other in series" refers to a configuration in which a plurality of the membrane separation units 10 are connected to each other in such a manner that the feed liquid S (the non-permeated fluid during operation of the membrane separation system) discharged from the feed space of the membrane separation unit 10 that precedes is supplied to the feed space of the membrane separation unit 10 that follows the preceding one. The phrase "a plurality of the membrane separation units 10 are connected to each other in parallel" refers to a configuration in which a plurality of the membrane separation units 10 are connected to each other in such a manner that the feed liquid S delivered from the tank 40 is supplied to the feed space of each of the plurality of the membrane separation units 10. The number of the membrane separation units 10 in the membrane separation system 100 is, for example, but not particularly limited to, 2 to 5. The membrane separation system 100 of the present embodiment may have a configuration in which a plurality of units each having a plurality of the membrane separation units 10 connected to each other in series are included and these units are connected to each other in parallel. For example, the membrane separation system 100 may include two units each having three membrane separation units 10 connected to each other in series, and the two units may be connected to each other in parallel.

The above description of one embodiment is applicable to the other embodiments unless technical inconsistency occurs. The above embodiments and modifications may be combined with each other unless technical inconsistency occurs.

### EXAMPLES

Hereinafter, the present invention will be described in more detail by way of Examples and Comparative Examples, but the present invention is not limited to these examples.

### [Production of pervaporation membrane]

First, a pervaporation membrane was produced by the following method. A coating liquid was prepared by mixing 1.650 kg (solids concentration: 30 wt%) of a silicone resin (YSR3022 available from Momentive Performance Materials Japan LLC.), 2.805 kg of toluene, 0.495 kg of a high-silica zeolite (HiSiv 3000 available from UNION SHOWA K.K.), 0.0495 kg of a silicone curing catalyst (YC6831 available from Momentive Performance Materials Japan LLC.), and 0.0495 kg of acetylacetone as a curing retardant. Next, the coating liquid was applied onto a porous support member (RS-50 available from Nitto Denko Corporation) having a thickness of 150 µm to obtain a coating (thickness: 500 µm). The coating was heated at 90°C for 4 minutes and then dried to produce a separation functional layer having a thickness of 50 µm. The weight ratio between the silicone resin and the high-silica zeolite was 50:50 in the separation functional layer. A pervaporation membrane was thus obtained.

### (Reference Example 1)

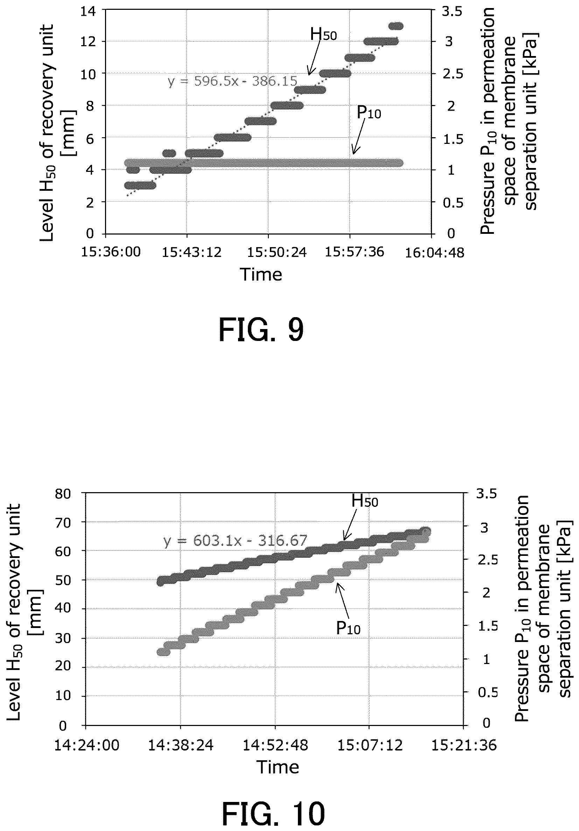

The membrane separation system 100 shown in FIG. 1 was operated using the produced pervaporation membrane. Specifically, in the membrane separation system 100, the above-mentioned pervaporation membrane was used as the pervaporation membrane 11 included in the membrane separation unit 10. As the membrane separation unit 10, two units of the spiral membrane elements as shown in FIG. 7 connected to each other in series were used. Each of the membrane elements had a membrane area of 25 m². A vacuum pump was used as the decompression unit 30. As the model feed liquid S, 2.7 wt% isopropyl alcohol (IPA) was used. The flow rate of the fermented liquid feed passage 91 was set to 1000 kg/h. In Reference Example 1, the operating condition of the decompression unit 30 was controlled in such a manner that the pressure P₁₀ in the permeation space of the membrane separation unit 10 was maintained at 1.1 kPa. The permeation flow rate calculated from transition of a level H₅₀ (mm) of the condensed fluid S₃ stored in the recovery unit 50 was 1.87 kg/h. Note that the level H₅₀ is a liquid level in the recovery unit 50. The concentration of the IPA in the condensed fluid S₃ stored in the recovery unit 50 was 29.8 wt/%. FIG. 9 shows a relationship between the level H₅₀ (mm) of the recovery unit 50 and time and a relationship between the pressure P₁₀ (kPa) in the permeation space of the membrane separation unit 10 and time in Reference Example 1.

### (Example 1)

In Example 1, the intermittent operation in which a stop of operation and a start of operation of the decompression unit 30 were repeated alternately was performed, and thereby the pressure P₁₀ in the permeation space of the membrane separation unit 10 was adjusted to be in a range from 1.1 to 3 kPa. In the intermittent operation, the rated operation of the decompression unit 30 was stopped when the pressure P₁₀ fell below 1.1 kPa, and the rated operation of the decompression unit 30 was started when the pressure P₁₀ exceeded 3 kPa. Except for this, the membrane separation system 100 shown in FIG. 1 was operated under the same conditions as those in Reference Example 1. The permeation flow rate calculated from transition of the level H₅₀ (mm) of the condensed fluid S₃ stored in the recovery unit 50 was 1.89 kg/h. The concentration of the IPA in the condensed fluid S₃ stored in the recovery unit 50 was 28.7 wt/%. FIG. 10 shows a relationship between the level H₅₀ (mm) of the recovery unit 50 and time and a relationship between the pressure P₁₀ (kPa) in the permeation space of the membrane separation unit 10 and time in the operation of Example 1. Note that FIG. 10 shows only one cycle of the intermittent operation. In Example 1, the cycle shown in FIG. 10 was carried out repeatedly.

The amount of power consumption (kWh) needed for the operation of each of Reference Example 1 and Example 1 was measured. Table 1 shows the results. The saturation vapor pressure (kPa) of the model feed liquid S in each of Reference Example 1 and Example 1 shown in Table 1 was calculated using Symmetry, a process modeling software available from Schlumberger Ltd.

**[Table 1]**

| | Pressure P₁₀ in permeation space of membrane separation unit [kPa] | Concentratio n of IPA in feed liquid S [wt%] | Saturation vapor pressure [kPa] | Concentration of IPA in condensed fluid S₃ [wt%] | Permeation flow rate [kg/h] | Amount of power consumption [kWh] |
|---|---|---|---|---|---|---|
| Reference Example 1 | 1.1 kPa | 2.7 | 9.3 | 29.8 | 1.87 | 9.9 |
| Example 1 | In range from 1.1 to 3 kPa by intermittent operation | 2.7 | 9.3 | 28.7 | 1.89 | 6.8 |

### (Reference Example 2)

As the model feed liquid S, 1.9 wt% IPA was used. Except for this, the membrane separation system 100 shown in FIG. 1 was operated under the same conditions as those in Reference Example 1. The permeation flow rate calculated from transition of the level H₅₀ (mm) of the condensed fluid S₃ stored in the recovery unit 50 was 1.95 kg/h. The concentration of the IPA in the condensed fluid S₃ stored in the recovery unit 50 was 23.5 wt/%.

### (Example 2)

In Example 2, the intermittent operation in which a stop of operation and a start of operation of the decompression unit 30 were repeated alternately was performed, and thereby the pressure P₁₀ in the permeation space of the membrane separation unit 10 was adjusted to be in a range from 1.1 to 5 kPa. In the intermittent operation, the rated operation of the decompression unit 30 was stopped when the pressure P₁₀ fell below 1.1 kPa, and the rated operation of the decompression unit 30 was started when the pressure P₁₀ exceeded 5 kPa. Except for this, the membrane separation system 100 shown in FIG. 1 was operated under the same conditions as those in Reference Example 2. The permeation flow rate calculated from transition of the level H₅₀ (mm) of the condensed fluid S₃ stored in the recovery unit 50 was 1.75 kg/h. The concentration of the IPA in the condensed fluid S₃ stored in the recovery unit 50 was 24 wt/%.

### (Example 3)

In Example 3, the intermittent operation in which a stop of operation and a start of operation of the decompression unit 30 were repeated alternately was performed, and thereby the pressure P₁₀ in the permeation space of the membrane separation unit 10 was adjusted to be in a range from 1.1 to 8 kPa. In the intermittent operation, the rated operation of the decompression unit 30 was stopped when the pressure P₁₀ fell below 1.1 kPa, and the rated operation of the decompression unit 30 was started when the pressure P₁₀ exceeded 8 kPa. Except for this, the membrane separation system 100 shown in FIG. 1 was operated under the same conditions as those in Reference Example 2. The permeation flow rate calculated from transition of the level H₅₀ (mm) of the condensed fluid S₃ stored in the recovery unit 50 was 1.09 kg/h. The concentration of the IPA in the condensed fluid S₃ stored in the recovery unit 50 was 23 wt/%.

The amount of power consumption (kWh) needed for the operation of each of Reference Example 2 and Examples 2 and 3 was measured. Table 2 shows the results. The saturation vapor pressure (kPa) of the model feed liquid S in each of Reference Example 2 and Examples 2 and 3 shown in Table 2 was calculated using Symmetry, a process modeling software available from Schlumberger Ltd.

**[Table 2]**

| | Pressure P₁₀ in permeation space of membrane separation unit [kPa] | Concentration of IPA in feed liquid S [wt%] | Saturation vapor pressure [kPa] | Concentration of IPA in condensed fluid S₃ [wt%] | Permeation flow rate [kg/h] | Amount of power consumption [kWh] |
|---|---|---|---|---|---|---|
| Reference Example 2 | 1.1 | 1.9 | 8.3 | 23.5 | 1.95 | 9.5 |
| Example 2 | In range from 1.1 to 5 kPa by intermittent operation | 1.9 | 8.3 | 24 | 1.75 | 6.1 |
| Example 3 | In range from 1.1 to 8 kPa by intermittent operation | 1.9 | 8.3 | 23 | 1.09 | 6.2 |

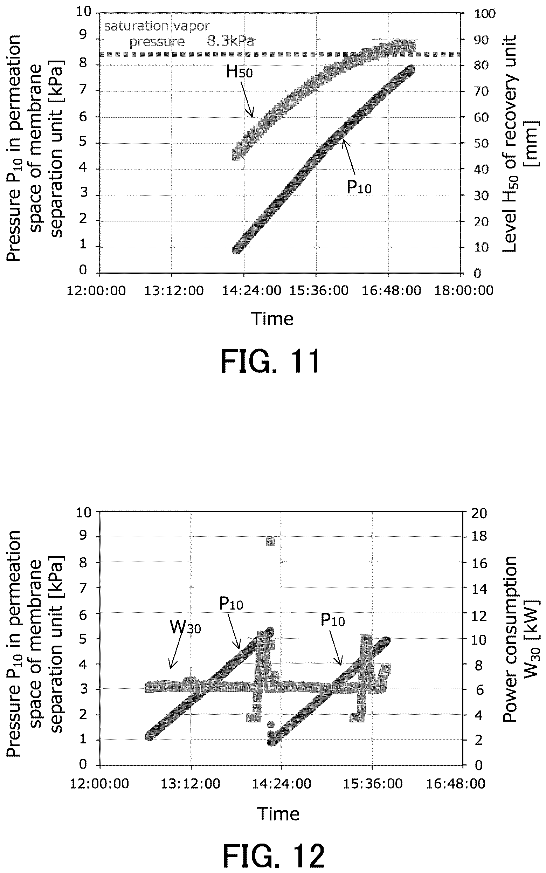

FIG. 11 shows a relationship between the pressure P₁₀ (kPa) in the permeation space of the membrane separation unit 10 and time and a relationship between the level H₅₀ (mm) of the recovery unit 50 and time in the operation of Example 3.

FIG. 12 shows a relationship between the pressure P₁₀ (kPa) in the permeation space of the membrane separation unit 10 and time and a relationship between power consumption W₃₀ (kW) of the decompression unit 30 (the vacuum pump) and time in the operation of Example 2.

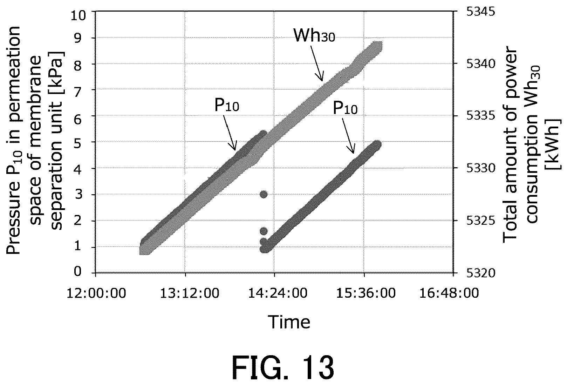

FIG. 13 shows a relationship between the pressure P₁₀ (kPa) in the permeation space of the membrane separation unit 10 and time and a relationship between a total amount of power consumption Wh₃₀ (kWh) of the decompression unit (the vacuum pump) and time in the operation of Example 2.

As understood from comparison between the results of Reference Example 1 and those of Example 1 shown in Table 1 and comparison between the results of Reference Example 2 and those of Examples 2 and 3, it was possible to reduce the power consumption by performing the intermittent operation of the decompression unit 30.

As shown in Table 2, in Example 3 in which the range of the pressure P₁₀ in the permeation space during the intermittent operation was expanded to nearly 8.3 kPa, which was the saturation vapor pressure, the permeation flow rate decreased. As shown in FIG. 11, the permeation occurred until the pressure P₁₀ reached the saturation vapor pressure, but the amount of the permeation gradually declined thereafter.

As shown in FIG. 12, the decompression unit 30 (the vacuum pump) instantaneously consumes a lot of electric power at the time of startup. However, as shown in FIG. 12, the rated operation of the decompression unit 30 (the vacuum pump) in the intermittent operation of Example 2 was for around one minute. Therefore, as shown in FIG. 13, there was almost no impact on the total amount of power consumption Wh₃₀ (kWh) of the decompression unit 30 (the vacuum pump).

The above reveals that, from the viewpoint of power consumption, it is advantageous for the decompression unit 30 to perform the intermittent operation in which a stop of operation and a start of operation are repeated alternately.

### INDUSTRIAL APPLICABILITY

The membrane separation system of the present embodiment is suitable for recovering an organic compound efficiently.

## Claims

1. A membrane separation system comprising a membrane separation unit, a condensation unit, and a decompression unit, wherein
the condensation unit is disposed between the membrane separation unit and the decompression unit,
the membrane separation unit has a pervaporation membrane that separates a feed liquid containing a volatile organic compound and a gas into a permeated fluid and a non-permeated fluid, and a feed space and a permeation space separated from each other by the pervaporation membrane,
the condensation unit condenses the organic compound contained in the permeated fluid,
the decompression unit decompresses an inside of the permeation space of the membrane separation unit, and
an operating condition of the decompression unit is controlled in such a manner that a pressure in the permeation space of the membrane separation unit has, during operation, a value larger than a minimum value of a pressure that the inside of the permeation space of the membrane separation unit can reach during rated operation of the decompression unit.

2. The membrane separation system according to claim 1, wherein the operating condition of the decompression unit is controlled in such a manner that the pressure in the permeation space of the membrane separation unit is in a range from 0.2 to 20.0 kPa during operation.

3. The membrane separation system according to claim 1, wherein in the condensation unit, the organic compound is condensed and thereby a partial pressure of the organic compound in the permeated fluid is reduced.

4. The membrane separation system according to claim 1, wherein the decompression unit performs intermittent operation in which a stop of operation and a start of operation of the decompression unit are repeated alternately, or low speed operation in which the decompression unit is operated at an output power less than a maximum output power.

5. The membrane separation system according to claim 4, wherein the decompression unit performs the intermittent operation or the low speed operation, and thereby the pressure in the permeation space of the membrane separation unit is adjusted to be in a range from 0.2 to 20.0 kPa.

6. The membrane separation system according to claim 5, wherein
the intermittent operation includes stopping the rated operation of the decompression unit when the pressure in the permeation space of the membrane separation unit falls below 0.2 kPa, and starting the rated operation of the decompression unit when the pressure in the permeation space of the membrane separation unit exceeds 20.0 kPa, and
the low speed operation includes operating the decompression unit at the output power less than the maximum output power when the pressure in the permeation space of the membrane separation unit falls below 0.2 kPa, and operating the decompression unit at the maximum output power when the pressure in the permeation space of the membrane separation unit exceeds 20.0 kPa.

7. The membrane separation system according to claim 1, further comprising, between the condensation unit and the decompression unit, a pressure regulating valve that adjusts the pressure in the permeation space.

8. A method for operating a membrane separation system including a membrane separation unit, a condensation unit, and a decompression unit, the condensation unit being disposed between the membrane separation unit and the decompression unit,
the membrane separation unit having a pervaporation membrane, and a feed space and a permeation space separated from each other by the pervaporation membrane,
the method comprising:
separating a feed liquid containing a volatile organic compound and a gas into a permeated fluid and a non-permeated fluid with the pervaporation membrane of the membrane separation unit; and
condensing, with the condensation unit, the organic compound contained in the permeated fluid, wherein
the separating includes controlling an operating condition of the decompression unit in such a manner that a pressure in the permeation space of the membrane separation unit has a value larger than a minimum value of a pressure that an inside of the permeation space of the membrane separation unit can reach during rated operation of the decompression unit.
